Europäisches Patentamt

European Patent Office

Office européen des brevets

(11) Veröffentlichungsnummer: **0 191 718**
**A1**

# (12) EUROPÄISCHE PATENTANMELDUNG

(21) Anmeldenummer: 86730009.7

(22) Anmeldetag: 21.01.86

(51) Int. Cl.⁴: **B 01 D 46/04**

(30) Priorität: 15.02.85 DE 3505729

(43) Veröffentlichungstag der Anmeldung: 20.08.86
Patentblatt 86/34

(84) Benannte Vertragsstaaten: BE CH FR GB IT LI NL SE

(71) Anmelder: **DEUTSCHE FILTERBAU GMBH, Neusser Strasse 111, D-4000 Düsseldorf 1 (DE)**

(72) Erfinder: **Roos, Hans, Lotharstrasse 24, D-4005 Meerbusch 3 (DE)**

(74) Vertreter: **Pfenning, Meinig & Partner, Mozartstrasse 17, D-8000 München 2 (DE)**

(54) Verfahren zur Reinigung von Filterelementen.

(57) Es wird ein Verfahren zur Reinigung jeweils eines Teils einer Mehrzahl von jeweils in einer Filterkammer (1 bis 6) angeordneten Filterelementen, die zur Entstaubung eines unter Druck stehenden Rohgases dienen, mit einem entgegengesetzt zur normalen Strömungsrichtung zugeführten Spülgas beschrieben. Das Spülgas durchströmt von der Reingasseite her die von angesammeltem Staub zu reinigenden Filterelemente. Hierzu wird das Spülgas von dem unter Druck stehenden, aus den jeweils nicht dem Reinigungsvorgang unterliegenden Filterelementen herausgeführten Reingasstrom abgezweigt. Das aus der jeweiligen Filterkammer austretende Spülgas wird zur Rohgasseite zurückgeführt. Die Vermischung des Spülgases mit dem Rohgas erfolgt mit Hilfe einer Druckgasstrahlpumpe (8), die zusätzliche eine Saugwirkung auf das Spülgas ausübt.

## Verfahren zur Reinigung von Filterelementen

Die Erfindung betrifft ein Verfahren zur Reinigung jeweils eines Teils einer Mehrzahl von jeweils in einer Filterkammer angeordneten Filterelementen gemäß dem Oberbegriff des Anspruchs 1.

Zur Reinigung von staubbehafteten Gasen verwendete Filter müssen in bestimmten Abständen gereinigt werden, damit ihre Funktion durch den sich auf den Filterflächen absetzenden Staub nicht zu stark beeinträchtigt wird. Eine derartige Reinigung der Filterflächen erfolgt beispielsweise mit Hilfe der Rückspülung von gereinigten Gasen. Hierbei ist es bekannt, die Rücksaugung der gereingten Gase durch die Filterflächen unter Verwendung von Ventilatoren durchzuführen. Diese bekannten Rückspülsysteme mit Ventilator weisen jedoch erhebliche Nachteile auf, die sich insbesondere

**2**

bei der Entstaubung von Hochtemperaturgasen zeigen. Für den Betrieb der Ventilatoren zur Erzeugung des erforderlichen Unterdruckes muß eine Fremdenergie eingesetzt werden und außerdem stellen die Ventilatoren bewegte und mechanisch stark beanspruchte Teile dar, die nur bis zu bestimmten Temperatur- und Druckwerten der Gase eingesetzt werden können.

Aus der DE-OS 27 26 735 ist eine Vorrichtung zur Reinigung von in einer Filterkammer angeordneten Filterelementen bekannt, bei der Blasluft von der Reingasseite her kommend mittels Luftspülung oder Druckluftschock durch die Filterflächen geleitet wird. Insbesondere für Heißgasfilter, wo gummiförmige Dichtelemente nicht verwendet werden können, wird für die bekannte Vorrichtung vorgeschlagen, mit Hilfe von Hubzylindern, deren Kolbenstangen mit dem Blasluftverteilerrohr in Verbindung stehen, die für die Reinigung auf die Filterelemente aufgesetzten Dichtteller während des normalen Filtervorganges soweit vom Ausgang der Filterelemente fernzuhalten, daß diese Dichtteller keinen Verschluß für die Filterelemente bilden. Obwohl hier keine Ventilatoren zur Erzeugung des Rückspülgasstromes verwendet werden, wird jedoch ein zusätzliches Blasluftsystem benötigt.

Aus der DE-OS 20 53 692 ist weiterhin ein Verfahren zum Reinigen von Filterflächen bekannt, bei dem eine Druckstoßrückspülung mittels Spülluftstrahlen, die in Gegenstrom richtung durch die Reingasausströmstutzen der im normalen Filterbetrieb von außen nach innen beaufschlagten Filterelemente geblasen werden, erfolgt. Hierbei werden die Reingasausströmstutzen während des Spülvorganges durch ein mechanisches Abschlußorgan gegenüber dem Reinluftraum abgeschlossen. Der Spülvorgang findet zur gleichen Zeit jeweils nur bei einem oder einem Teil der Filterelemente statt, so daß der Reinluftstrom nicht unterbrochen wird. Jedoch wird bei diesem Verfahren ebenfalls ein eigenes Druckluftsystem für den Spülvorgang benötigt.

Es ist daher die Aufgabe der vorliegenden Erfindung, das bekannte Verfahren zur Reinigung jeweils eines Teils einer Mehrzahl von jeweils in einer Filterkammer angeordneten Filterelementen für die Aussonderung von partikelförmigen Stoffen aus einem unter Druck stehenden Rohgas mit einem Spülgas, das unter Druck von der Reingasseite her die von angesammeltem Staub zu reinigenden Filterelemente durchströmt, in der Weise zu verbessern, daß kein eigenes Druckluftsystem für die Spülung erforderlich ist und daß hierzu auch keine bewegten Teile und keine artfremde Energie benötigt werden.

Diese Aufgabe wird erfindungsgemäß gelöst durch das im kennzeichnenden Teil des Anspruchs 1 angegebene Merkmal. Vorteilhafte Ausbildungen dieses Verfahrens ergeben sich aus den Unteransprüchen.

Die erfindungsgemäße Lösung besteht darin, daß das Spülgas von dem unter Druck stehenden, aus den jeweils nicht dem Reinigungsvorgang unter-liegenden Filterelementen herausgeführten Reingasstrom

4

abgezweigt wird. Um einen Gasverlust zu vermeiden und auch um eine etwaige Verunreinigung der Umgebung durch das Gas zu verhindern, wird vorzugsweise das aus den Filterkammern ausgetretene Spülgas dem zu reinigenden Rohgas wieder beigemischt. Das Verfahren wird vorteilhaft in der Weise durchgeführt, daß die Ausgänge der Filterkammern zusammengeschlossen werden und daß die Eingänge für das zu reinigende, unter Druck stehende Rohgas der den zu reinigenden Filterelementen zugeordneten Filterkammern geschlossen und gleichzeitig während des Filtervorganges geschlossene Ausgänge dieser Filterkammern für den Auslaß des Spülgases geöffnet werden. Die Beimischung des aus den Filterkammern ausgetretenen Spülgases zu dem zu filternden Rohgas kann mit Hilfe einer Druckgasstrahlpumpe erfolgen, so daß für diesen Vorgang keine bewegten Teile benötigt werden.

Die Erfindung wird im folgenden anhand eines in den Figuren dargestellten Ausführungsbeispiels näher erläutert. Es zeigen:

Fig. 1   eine schematische Darstellung einer Hochdruck-Heißgas-Entstaubungsanlage mit Rückspülreinigung und

Fig. 2   die schematische Darstellung einer Druckgasstrahlpumpe für die Spülgasrückführung.

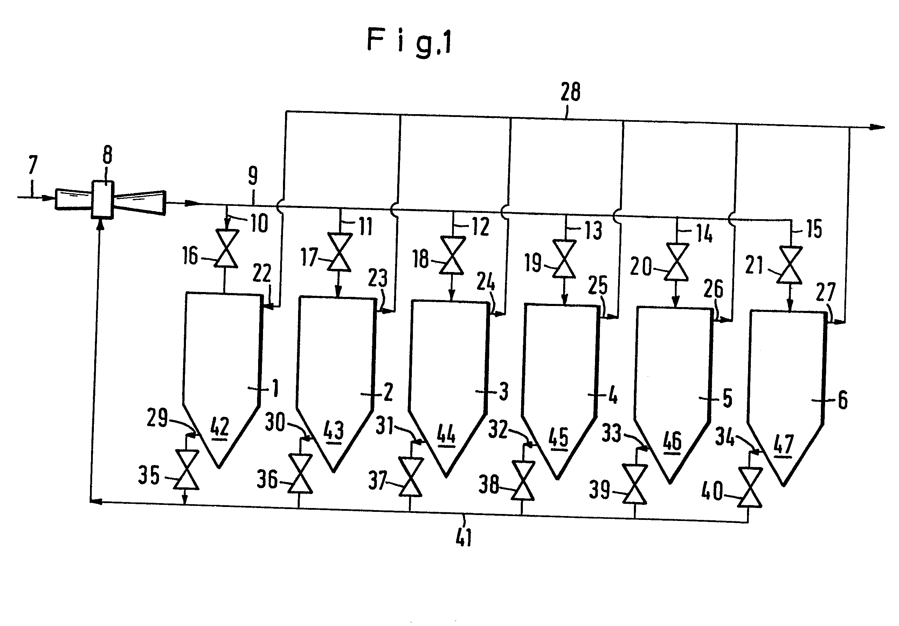

Die Anlage nach Fig. 1 weist sechs Filterkammern 1 bis 6 auf, die nicht näher dargestellte Filterelemente enthalten. Das zu entstaubende Rohgas wird über eine Leitung 7 zugeführt und gelangt über eine Druckgasstrahlpumpe 8 zu einer Leitung 9, von der Abzweigungen 10 bis 15 jeweils zu dem Rohgaseinlaß jeder der Filterkammern 1 bis 6 abgehen. In jeder der Abzweigungen 10 bis 15 befindet sich eines von sechs steuerbaren Ventilen 16 bis 21, durch das die Verbindung zwischen der Leitung 9 und dem Rohgaseinlaß der jeweils zugeordneten der Filterkammern 1 bis 6 geschlossen oder geöffnet werden kann.

Die Filterkammern 1 bis 6 weisen jeweils einen der Ausgänge 22 bis 27 für das gefilterte Reingas auf. Diese Ausgänge sind mit einer gemeinsamen Reingasleitung 28 verbunden, über die das entstaubte Reingas abgeführt wird.

Jede der Filterkammern 1 bis 6 weist weiterhin einen von Auslässen 29 bis 34 für das zur Filterreinigung verwendete Spülgas auf. Jeder dieser Auslässe 29 bis 34 ist über eines von steuerbaren Ventilen 35 bis 40 mit einer gemeinsamen Spülgasleitung 41 verbunden. Dabei kann jedes der Ventile 35 bis 40 so gesteuert werden, daß eine Verbindung zwischen dem zugeordneten der Auslässe 29 bis 34 und der Spülgasleitung 41 besteht oder diese unterbrochen ist. Die Spülgasleitung 41 wird zu der Druckgasstrahlpumpe 8 zurückgeführt.

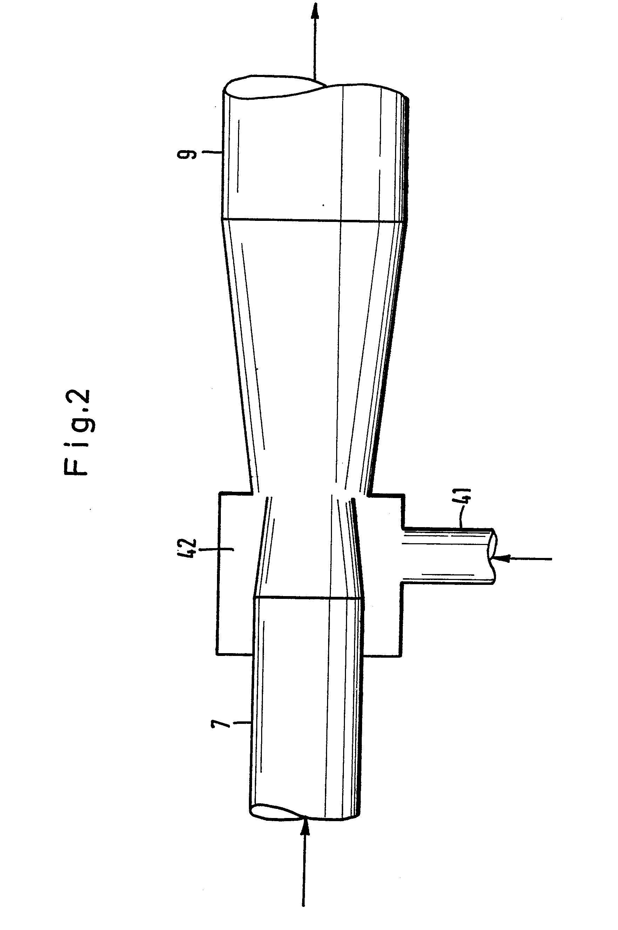

In Fig. 2 ist die in Fig.1 verwendete, an sich bekannte Druckgasstrahlpumpe 8 dargestellt.

Die Leitung 7 endet mit ihrem sich verjüngenden Ende in einem Ringraum 42, mit dessen Mantel die Enden der Leitung 9 und der Spülgasleitung 41 gasdicht verbunden sind. Das über die Leitung 7 zugeführte Rohgas strömt in die Leitung 9 und reißt hierbei das über die Spülgasleitung 41 in den Ringraum 42 gebrachte Spülgas mit sich. Es wird somit das Gemisch aus dem Rohgas und dem zurückgeleiteten Spülgas zu den Rohgaseinlässen der Filterkammern 1 bis 6 geführt.

Die beschriebene Anlage arbeitet wird folgt:

Wird nur die Entstaubung des Rohgases vorgenommen, dann sind alle Ventile 16 bis 21 geöffnet und alle Ventile 35 bis 40 geschlossen. Das unter Druck stehende Rohgas tritt somit in alle Filterkammern 1 bis 6 ein und wird in diesen entstaubt. Es tritt dann über die Ausgänge 22 bis 27 der Filterkammern 1 bis 6 aus und wird über die Reingasleitung 28 abgeführt.

In Fig. 1 sind die Strömungsverhältnisse durch die Pfeilrichtungen für den Fall angedeutet, daß die Filterelemente in der Filterkammer 1 gereinigt werden sollen und nur in den Filterkammern 2 bis 6 eine Entstaubung des Rohgases stattfindet. Hierbei sind das Ventil 16 geschlossen und das Ventil 35 geöffnet. Die Abzweigung 10 ist somit unterbrochen, so daß kein Rohgas in die Filterkammer 1 geliefert wird. Statt dessen wird das in der Reingasleitung 28 unter Druck stehende Reingas über den Ausgang 22 in die Filterkammer geleitet, in der

0191718

**7**

es die Filterelemente in entgegengesetzter Richtung durchströmt und über den Auslaß 29 und das geöffnete Ventil 35 zur Spülgasleitung 41 abgeführt wird. Hierbei wird der auf den Filterelementen abgelagerte Staub abgelöst und fällt in die Silos 42 bis 47.

Das zur Druckgasstrahlpumpe 8 zurückgeführte Spülgas ist damit weitgehend staubfrei. Die Druckgasstrahlpumpe 8 übt eine Saugwirkung auf das Spülgas aus, so daß die Filterelemente mit hoher Geschwindigkeit vom Spülgas durchströmt werden. Hierdurch ergibt sich eine große Reinigungswirkung. Nach der Reinigung der Filterelemente in der Filterkammer 1 werden das Ventil 16 wieder geöffnet und das Ventil 35 wieder geschlossen, so daß diese Filterkammer für den normalen Entstaubungsbetrieb wieder zur Verfügung steht. In bestimmten Abständen wird dieser Reinigungsvorgang dann auch bei den Filterkammern 2 bis 6 nacheinander durchgeführt. Somit kann die Reinigung der Filterelemente vorgenommen werden, ohne daß der Reingasstrom unterbrochen wird und ohne daß bewegte Teile im Gasstrom angeordnet sind. Weiterhin werden keine Fremdenergie und auch kein separates Druckluftsystem für die Erzeugung des Spülgasstromes benötigt.

0191718

Patentansprüche

1. Verfahren zur Reinigung jeweils eines Teils einer Mehrzahl von jeweils in einer Filterkammer angeordneten Filterelementen für die Aussonderung von partikelförmigen Stoffen aus einem unter Druck stehenden Rohgas mit einem Spülgas, das unter Druck von der Reingasseite her die von angesammeltem Staub zu reinigenden Filterelemente durchströmt, d a d u r c h  g e k e n n z e i c h n e t , daß das Spülgas von dem unter Druck stehenden, aus den jeweils nicht dem Reinigungsvorgang unterliegenden Filterelementen herausgeführten Reingasstrom abgezweigt wird.

2. Verfahren nach Anspruch 1, dadurch gekennzeichnet, daß das aus den Filterkammern (1) ausgetretene Spülgas dem zu reinigenden Rohgas wieder beigemischt wird.

3. Verfahren nach Anspruch 1 oder 2, dadurch gekennzeichnet, daß die Ausgänge der Filterkammern (1 bis 6) zusammengeschlossen werden und daß die Eingänge für das zu reinigende, unter Druck stehende Rohgas der den zu reinigenden Filterelementen zugeordneten Filterkammern (1) geschlossen und gleichzeitig während des Filtervorganges geschlossene Ausgänge (29) dieser Filterkammern (1) für den Auslaß des Spülgases geöffnet werden.

0191718

2

4. Verfahren nach Anspruch 2 oder 3,
dadurch gekennzeichnet, daß die Beimischung
des Spülgases zu dem Rohgas mit Hilfe
einer das Spülgas ansaugenden Druckgasstrahlpumpe (8) erfolgt.

5. Verfahren nach einem der Ansprüche 1 bis 4,
dadurch gekennzeichnet, daß die Ausgänge
der den jeweils zu reinigenden Filterelementen zugeordneten Filterkammern (1)
für das Spülgas mit einer allen Filterkammern (1 bis 6) gemeinsamen Spülgasleitung (41) verbunden werden.

# Fig.1

1/2

# Fig.2

2/2

0191718

Europäisches
Patentamt

**EUROPÄISCHER RECHERCHENBERICHT**

0191718
Nummer der Anmeldung

EP 86 73 0009

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 607 694 (DEGUSSA) <br> * Ansprüche 1,3-5; Figur 1 * | 1-3,5 | B 01 D 46/04 |
| X | DE-A-2 931 403 (VYZKUMNY USTAV VZDUCHOTECHNIKY) <br> * Ansprüche 2,3; Seite 14, Absatz 2 - Seite 16, Absatz 1; Figur 1 * | 1,2 | |
| A | DE-A-1 806 059 (SERCK R & D LTD.) <br> * Anspruch 1; Figur 1 * | 1,2 | |

RECHERCHIERTE
SACHGEBIETE (Int. Cl.4)

B 01 D 46/00

Der vorliegende Recherchenbericht wurde für alle Patentansprüche erstellt.

| Recherchenort <br> DEN HAAG | Abschlußdatum der Recherche <br> 21-05-1986 | Prüfer <br> POLESAK, H.F. |
|---|---|---|